# EUROPÄISCHE PATENTSCHRIFT

(11) **EP 1 112 010 B1**
(45) Veröffentlichungstag und Bekanntmachung des Hinweises auf die Patenterteilung: **08.01.2003**
(21) Anmeldenummer: 99968605.8
(22) Anmeldetag: 07.09.1999
(51) Int. Cl.: A47C 20/04

(54) **VORRICHTUNG ZUR VERSTELLUNG EINES MÖBELS**
DEVICE FOR DISPLACING FURNITURE
DISPOSITIF POUR DEPLACER UN MEUBLE

(30) Priorität: 07.09.1998 DE 29816022 U
(43) Veröffentlichungstag der Anmeldung: 04.07.2001
(73) Patentinhaber: Dewert Antriebs- und Systemtechnik GmbH & Co. KG, D-32278 Kirchlengern (DE)
(72) Erfinder: BOKÄMPER, Ralf, D-32312 Lübbecke (DE); HERZIG, Friedhelm, D-32547 Bad Oeynhausen (DE); CTVRTNICEK, Martin, D-32257 Bünde (DE); WEHMEYER, Klaus, D-32051 Herford (DE)
(74) Vertreter: Specht, Peter, Dipl.-Phys.
(86) Internationale Anmeldenummer: EP9906562
(87) Internationale Veröffentlichungsnummer: WO00013554

(56) Entgegenhaltungen:
- DE-C- 4 400 657
- DE-U- 9 116 509

## Beschreibung

Die Erfindung betrifft eine Verstellvorrichtung nach dem Oberbegriff des Anspruches 1.

Verstellvorrichtungen zur Verstellung eines Möbels der gattungsgemäßen Art sind z.B. aus der EP 0 615 667 B bekannt. Die in dieser Schrift dargestellte Verstellvorrichtung beruht hinsichtlich des Prinzips der Netzfreischaltung auf der Funktionsweise der DE 21 05 570 und hat sich zwar an sich bewährt. Verbesserungspotential besteht allerdings hinsichtlich des folgenden Effektes. Da mit nur einem Tastschalter sowohl das Relais zur Netzfreischaltung als auch ein Relais zur Ansteuerung des Stellmotors betätigt wird, d.h., es werden mit nur einem Tastschalter gleichzeitig zwei Schaltvorgänge ausgelöst, besteht die Gefahr, daß bei einem versehentlichen Drücken des Tastschalters - beispielsweise wenn die Bedienungseinheit im Schlaf ungewollt belastet wird - ein unbeabsichtigtes Verstellen des Möbels erfolgen kann. Diese Situation gilt es - beispielsweise bei der Verstellung von Krankenhausbetten - sicher zu vermeiden. Problematisch ist zudem, daß zwar die Ausbildung der Schalteinrichtung als Tastschalter eine besonders einfache Betätigung der Stellmotoren ermöglicht, daß aber andererseits eine ungewollte Betätigung der leicht zu betätigenden Tastschalters auch besonders leicht zu einer unbeabsichtigten Netzzuschaltung führen kann.

Aus der Beschreibung Netzfreischalter NFA 60/61, NFF 14, Firma Schalk, Westerheim, Mai 1996, ist ein Netzfreischaltautomat bekannt, der üblicherweise in eine Unterverteilun eingesetzt wird. Diese Netzfreischaltautomaten schalten den zu überwachenden Stromkreis automatisch ab, sobald der letzte Verbraucher ausgeschaltet ist. Eine eingespeiste Überwachungsgleichspannung dient dazu, das Einschalten eines Verbrauchers zu erkennen.

Die Erfindung hat die Aufgabe, den Nachteil des bekannten Standes der Technik zu vermeiden, daß ein Möbel im Schlaf unbeabsichtigt verstellt werden könnte, was leicht zu einer unbeabsichtigten Netzzuschaltung führen kann, da mit einer Tastenbetätigung das Relais sowohl zur Netzfreischaltung als auch das Relais zur Ansteuerung des Stellmotors angesteuert wird.

Die Erfindung löst diese Aufgabe durch den Gegenstand des Anspruches 1.

Dabei ist in einfacher Weise ein von den Schaltmitteln (bzw. Schalteinrichtungen) zum Betätigen des wenigstens einen Stellmotors der Bedienungseinheit getrenntes Schaltmittel zur Betätigung des Netzfreischaltungsrelais vorgesehen, so daß durch Betätigung eines Tastschalters allein kein versehentliches Verstellen und/oder Netzeinschalten des Möbelantriebes erfolgen kann. Diese Erhöhung der Sicherheit gegen unbeabsichtigtes Verstellen hat den weiteren Vorteil, daß bei der Gestaltung der Bedienungseinheit - typischerweise ein Handschalter - losgelöst vom Zwang zum Erzielen einer durch die Geometrie des Handschalters bedingten Sicherheit, neue Wege bei der Designgebung des Handschalters beschritten werden können.

Vorzugsweise sind die Schalteinrichtung zur Betätigung des Relais und die Schalteinrichtung zum Betätigen des wenigstens einen Stellmotors im Zustand der Netzfreischaltung galvanisch vollständig voneinander getrennt. Diese Variante der Erfindung hat den besonderen Vorteil, daß die Antriebseinrichtung, d.h. die Stellmotoren bei einer Betätigung des Schalters zur Netzfreischaltung nicht kurzfristig eine unerwünscht hohe Belastung der Spannungsquelle zur Abgabe der Steuerspannung bzw. des Steuerstromes an den Steuerkontakt des Relais zur Netzfreischaltung hervorrufen kann. Wird nämlich, wie in dem gattungsbildenden Stand der Technik ausgeführt, zur Beaufschlagung der Steuereingänge des Netzfreischaltungsrelais eine Hilfsspannungsquelle genutzt, d.h. eine Spannungsquelle, welche auch im Zustand der Netzfreischaltung noch eine Gleichspannung zur Betätigung des Steuereinganges des Netzfreischaltungsrelais am Tastschalter zur Betätigung des Stellmotorrelais bereitstellt, kann es im Falle der vorgeschlagenen Parallelschaltung der Spannungsquelle zu einem kurzfristigen hohen Stromfluß (z.B. 100 ms lang 3A) kommen, der durch die Stromaufnahme der Stellmotoren verursacht wird. Dieser unerwünschte Effekt dauert an, bis das mechanisch arbeitende Netzfreischaltungsrelais mit einer gewissen Verzögerung umschaltet; er kann zu einem unerwünscht schnellen Entladen der Hilfsspannungsquelle (z.B. eine Batterie) sowie zu unerwünschten Stromspitzen an den übrigen Schaltungskomponenten führen, aus denen im Extremfall Fehlfunktionen resultieren können.

Die Trennung des Schalters zur Netzfreischaltung von den Tastschaltern zur Betätigung der Stellmotoren der Antriebseinrichtung hat noch weitere Vorteile. Einer dieser Vorteile besteht, darin, daß es möglich ist, die Art der Betätigung der Netzfreischaltung anders als die Art der Betätigung der Stellmotoren auszulegen. Während nämlich die Betätigung der Stellmotoren durch Tastschalter bequem und einfach ist, soll die Netzfreischaltung vor und nach Inbetriebnahme der Antriebseinrichtung nur jeweils einmal erfolgen, insbesondere soll ein versehentliches Betätigen ausgeschlossen werden. Dazu bietet es sich an, anstelle eines Tastschalters als Schaltmittel zur Netzfreischaltung lieber eine andere Art Schalter zu verwenden, z.B. einen Schiebeschalter, der zwei definierte Schaltstellungen hat, so daß ein versehentliches Betätigen weitestgehend vermieden wird.

Bei einer weiteren besonders bevorzugten Ausführungsform der Erfindung wird anstelle eines Schiebeschalters ein Neigungssensor eingesetzt, der beim Überschreiten eines bestimmten Neigungswinkels automatisch die Netzfreischaltung auslöst, also beispielsweise dann, wenn die Netzfreischaltung in der Handbedienungseinheit untergebracht ist, so daß beim Ergreifen der Handbedienung quasi automatisch eine Netzfreischaltung erfolgt. Zweckmäßig ist es, wenn man die Ausschalt-/Einschaltlage am Bedienungsteil durch mechanische Verstellung verändern kann, um die unterschiedlichen Ruhelagen des Bedienteiles je nach Kundenwunsch mit einzubeziehen.

Alternativ ist es auch möglich, daß die Schalteinrichtung zur Betätigung des Relais einen akustischen Sensor umfaßt. Der akustische Sensor - und/oder eine ihm nachgeordnete Auswertungseinheit - kann beispielsweise so ausgelegt sein, daß bei jeglichem Geräusch, welches am Sensor einen vorgegebenen Schallpegel erzeugt, eine Netzzuschaltung erfolgt. Diese Art der Netzzuschaltung bedeutet insbesondere für bewegungsbehinderte Menschen eine große Erleichterung, deren Vorteil sich weiter erhöht, wenn die Sprachsensorlösung zur Netzfreischaltung mit einem Verfahren zur Steuerung der Verstellvorrichtung eines Möbels durch Spracheingabe kombiniert wird, wie es aus der DE 43 15 210 C2 bekannt ist. In diesem Fall ist es sogar denkbar, mit einem Sprachbefehl mehrere Funktionen auszulösen - also die Netzfreischaltung und die Motorsteuerung (zum einen bewirkt der Sprachbefehl eine Motorsteuerung und zum anderen bewirkt er aufgrund des Überschreiten eines Grenzschallpegels eine Zuschaltung des Netzes) in einfacher Weise ggf. sogar nur mit jeweils einem Befehl zu aktivieren ("AUF, AB"), andererseits aber im Zustand der Netzfreischaltung eine vollständige galvanische Trennung des Schaltungsabschnittes "Antriebseinrichtung" vom Schaltungsabschnitt "Netzfreischaltungssteuerung" zu erzielen.

Eine weitere vorteilhafte Ausführungsform der Erfindung nutzt als Schaltmittel zur Betätigung des Relais - also zur Netzfreischaltung - einen Bewegungssensor, so daß die Netzfreischaltung bei geeigneter Anordnung des Bewegungssensors - z.B. auf einem Beistelltisch und ggf. in einem vom Handschalter getrennten Gehäuse - auf einfache Weise mit einer Handbewegung am Sensor vorbei erfolgen kann.

Alternativ ist es auch möglich, daß die Schalteinrichtung zur Betätigung des Relais einen Berührungssensor umfaßt, z.B. mit einem leitfähigen Kunststoff oder einen kapazitiven Berührungssensor mit einer Metallplatte, deren elektrisches Feld durch Auflegen eines Fingers veränderbar ist.

Zweckmäßig ist es ferner, wenn die Schalteinrichtung zur Betätigung des Relais einen lichtempfindlichen Sensor umfaßt. Ein lichtempfindlicher Sensor kann beispielsweise derart ausgelegt werden, daß bei Überschreiten einer Grundhelligkeit im Raum, also durch das Anschalten einer Lampe oder durch die Tageshelligkeit, eine Netzzuschaltung erfolgt. In der Dunkelheit, also während des Schlafes, bleibt das Netz dagegen abgeschaltet.

Die vorstehend angegebenen Varianten zur Auslegung des Schalters zur Netzfreischaltung lassen sich - wie bereits erwähnt - an verschiedensten Stellen der Schaltung und Verstelleinrichtung anordnen. Beispielsweise ist es bei Krankenhausbetten denkbar, daß ein Patient zwar die Stellmotoren bedienen können soll, daß er aber die Netzfreischaltung an sich nicht bedienen darf, beispielsweise, da eine bestimmte Liegeposition während der Nacht eingehalten werden soll. Bei diesem Anwendungsfall ist es vorteilhaft, den Schalter zur Netzfreischaltung von der Bedienungseinheit getrennt beispielsweise in der Antriebseinrichtung, dem Netzstecker, in der Netzzuleitung oder an einem anderen geeigneten Ort unterzubringen (siehe hierzu die detaillierte Figurenbeschreibung). Damit ist eine geeignete Sperreinrichtung für den Krankenhausbereich gegeben.

Weitere vorteilhafte Varianten der Erfindung sind den übrigen Unteransprüchen zu entnehmen.

Nachfolgend wird die Erfindung unter Bezug auf die Zeichnung anhand von Ausführungsbeispielen näher beschrieben, wobei die Figuren 1c, 1d, 1e und 4 sowie 5 und 6 nicht vom Anspruch 1 umfaßt werden. Es zeigt:
- Fig. 1a-e: schematische Ansichten verschiedener Ausführungsformen einer Verstellvorrichtung;
- Fig. 2-7: vereinfachte Prinzipschaltpläne verschiedener Ausführungsbeispiele einer Verstellvorrichtung.

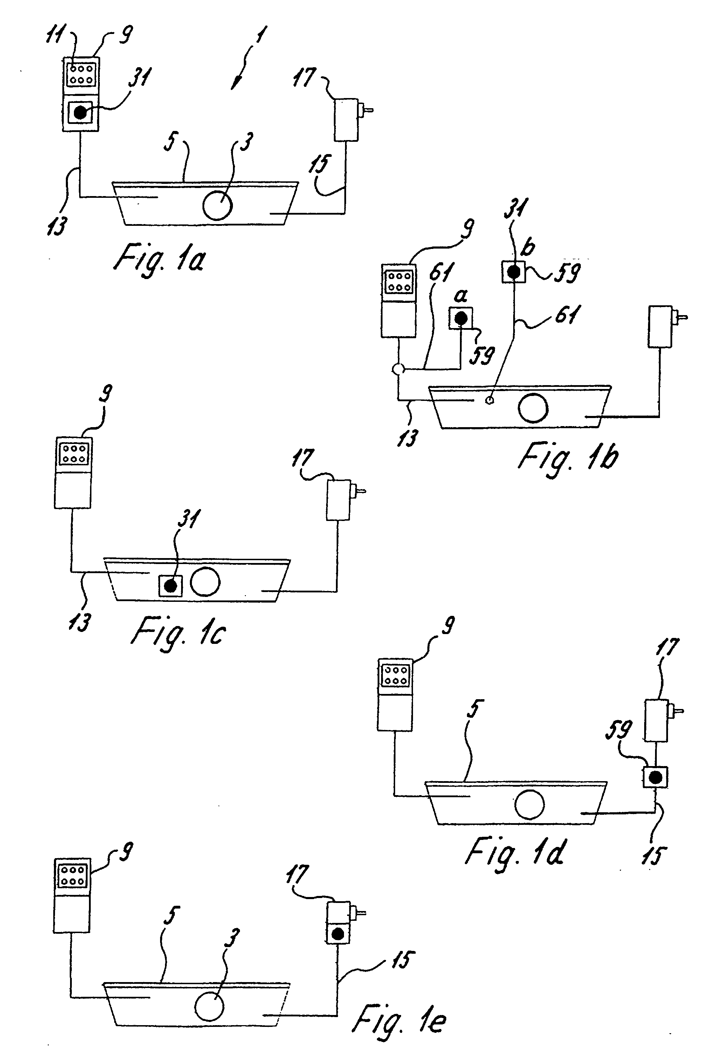

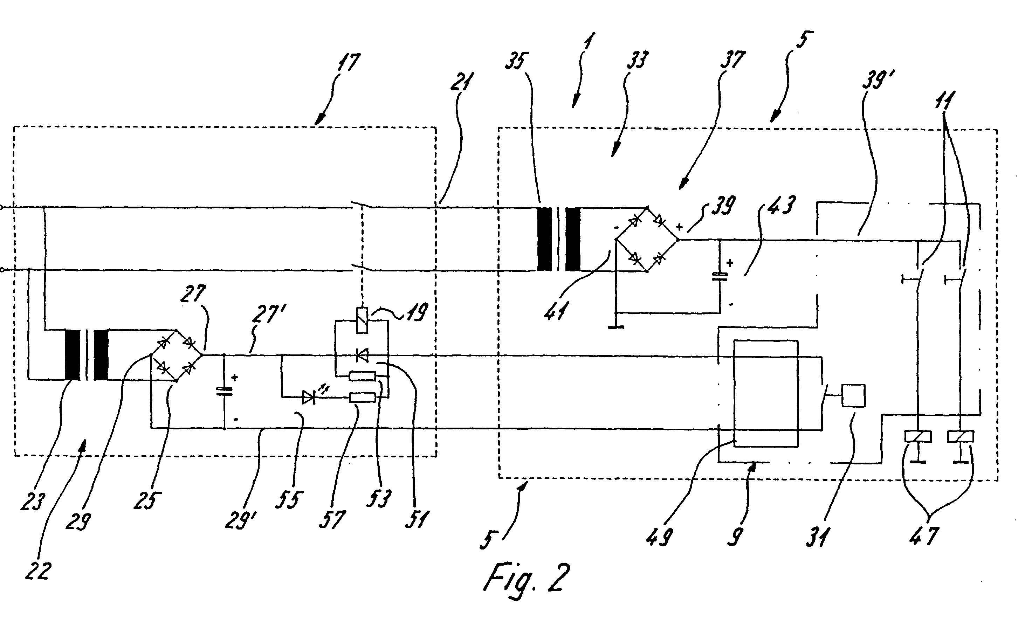

Fig. 1a zeigt im Zusammenspiel mit Fig. 2 den Grundaufbau einer erfindungsgemäßen Verstellvorrichtung. Die Verstellvorrichtung 1 zur Verstellung eines (hier nicht abgebildeten) Möbels umfaßt eine wenigstens einen - vorzugsweise aber mindestens zwei - Gleichspannungs-Stellmotor 3 aufweisende Antriebseinrichtung 5 (in Fig. 2 der rechte, mit kurzen Strichen angedeutete Schaltungsabschnitt), dem eine netzgebundene Spannungsquelle 33 vorgeschaltet ist.

Eine Bedienungseinheit 9 mit Schaltmitteln - hier Tastschaltern 11 - ermöglicht die Betätigung der Stellmotoren 3. Die Bedienungseinheit ist ein Handschalter 9, der über eine Handschalterleitung 13 mit mehreren Adern mit der Antriebseinrichtung verbunden ist. Die Antriebseinrichtung 5 ist wiederum über eine Netzzuleitung 15 mit einem Netzsteckerteil 17 verbunden.

Das Netzsteckerteil 17 weist ein Relais 19 mit zwei Relaisschaltern zur Netzfreischaltung der die Netzwechselspannung fuhrenden Adern 21 auf. Der Steuereingang des Relais 19 wird mit Hilfe einer Gleichspannung angesteuert, die von einer Spannungsquelle 22 mit einem dem Steuereingang des Relais vorgeschalteten Transformator 23 mit dazu in Reihe geschalteten Gleichrichter 25 erzeugt wird. Vom Pluspol 27 und dem Minuspol 29 des Gleichrichters 25 wird jeweils eine Leitungsader 27' zum Relais 19 und eine Ader 29' durch die Leitungen 13 und 15 hindurch bis zur Schalteinrichtung 31 im Handschalter 9 und zurück zum Relais 19 geführt. Damit wird im Zustand der Netzfreischaltung in besonders vorteilhafter Weise eine völlige Trennung des Schaltungsabschnittes zur Netzfreischaltung vom Schaltungsabschnitt zur Betätigung der Antriebseinrichtung 5 erreicht. Die Notwendigkeit zur Realisierung einer Hilfsspannungsquelle entfällt, ferner wird durch die Antriebseinrichtung 5 bei einer Betätigung der Schalteinrichtung 31 keine unerwünschte Stromspitze, d.h. eine Belastung der Steuerspannung des Netzfreischaltungsrelais 19 durch den Stellmotor 3, mehr erzeugt.

Die beiden Wechselspannungsleitungs-Adern 21 führen durch die Netzzuleitung 15 zur Antriebseinrichtung 5 mit der netzgebundenen Gleichspannungsquelle 33, die einen Transformator 35 und einen dem Transformator 35 nachgeschalteten Gleichrichter 37 aufweist. Zwischen den ausgangsseitigen Gleichspannungs-Pluspol 39 und den Minuspol 41 (Masse) des Gleichrichters ist ein Glättungskondensator 43 geschaltet. Vom Pluspol 39 verläuft eine Leitungsader 39' zu den Tastschaltern 11, welche bei ihrem Schließen jeweils den Steuereingang eines Motorrelais 47 zur Betätigung der (in Fig. 2 nicht dargestellten) Stellmotoren 3 zur Verstellung des Möbels ansteuern.

Rein schematisch durch einen Funktionsblock angedeutet ist eine Verzögerungschaltung bzw. ein Zeitglied 49 in den Zuleitungen der Schalteinrichtung 31 dargestellt, welches nach dem Auslösen der Schaltereinrichtung 31 das Netz erst nach einer vorgegebenen Zeit von z.B. einigen Minuten freischaltet, um ein versehentliches Netzfreischalten - beispielsweise bei einer Auslegung des Schalters 31 als akustischer Sensor oder als Neigungssensor - nach dem Netzzuschalten für einen zur Betätigung ausreichenden Zeitraum auszuschließen.

Eine parallel zu den Steuereingängen des Relais 19 geschaltete Diode 51 in der Plusleitung 27' dient zur Vermeidung von Stromspitzen. Ein parallel zur Diode 51 geschalteter Widerstand 53 deutet die Anschlußmöglichkeit eines zusätzlichen Verbrauchers an (z.B. eine optionale IR-Schnittstelle). Eine parallel zum Widerstand 53 geschaltete Leuchtdiode 55 mit dazu in Reihe geschaltetem Widerstand 57 dient zur optischen Anzeige des Zustandes der Netzfreischaltung. Zur Realisierung der Schalteinrichtung eignen sich die eingangs bereits genannten Optionen Neigungssensor, akustischer Sensor, Bewegungssensor, Berührungssensor und lichtempfindlicher Sensor.

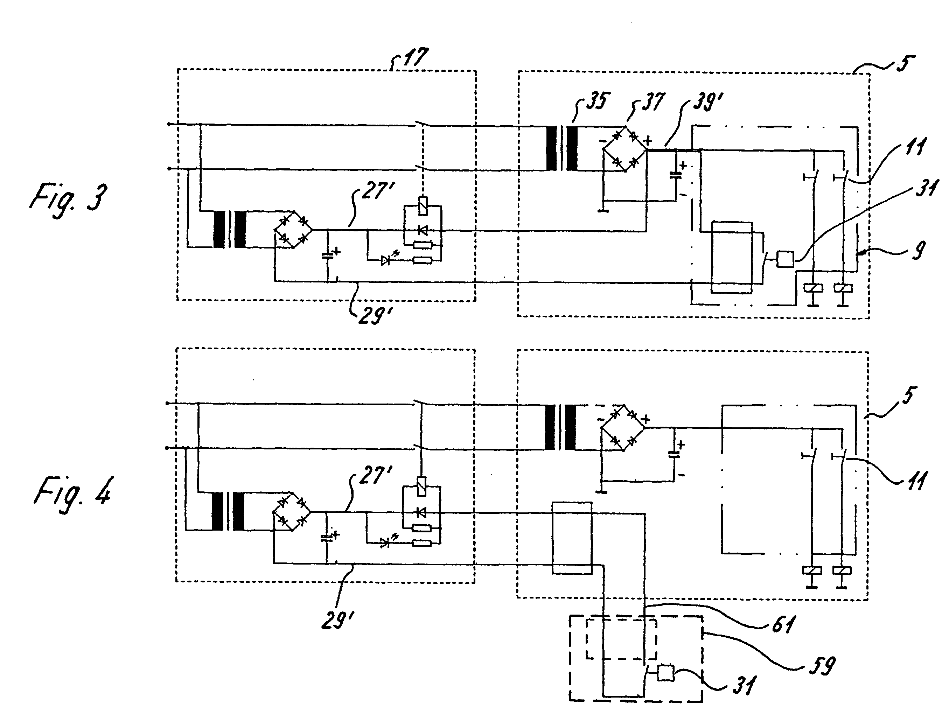

Das Ausführungsbeispiel der Fig. 3 unterscheidet sich von dem der Fig. 2 dadurch, daß die Ader 27' von der Schalteinrichtung 31 zum Relais 19 zurück in vereinfachter Ausführung, bei welcher allerdings der Vorteil vollständiger galvanischer Trennung im Zustand der Netzfreischaltung nicht mehr gegeben ist, im Bereich der Handschalterleitung 13 mit der Plusleitungsader 39' zur Betätigung der Tastschalter 11 vereint ist, so daß eine der Adern der Handschalterleitung 13 eingespart werden kann. Der Vorteil des Verhinderns versehentlicher Betätigungen bleibt auch bei dieser Variante der Erfindung erhalten.

Die Variante der Fig. 4 unterscheidet sich von der Variante der Fig. 3 dadurch, daß der Schalter 31 aus der Antriebseinrichtung heraus in ein separates Gehäuse geführt ist und eine eigene Gehäusezuleitung 61 aufweist, was dem Designer eine besonders große Gestaltungsfreiheit bei der Realisierung des Handschalters 9 läßt, da dieser nicht mehr durch die geometrische Formgebung gegen ein versehentliches Betätigen der Tastschalter 11 geschützt werden muß. Nach Fig. 1b ist die Variante der Fig. 4 beispielsweise dadurch realisierbar, daß die Gehäusezuleitung 61 von der Handschalterleitung 13 abgezweigt wird oder direkt von der Antriebseinrichtung 5 fortführt. Fig. 1c veranschaulicht demgegenüber eine Integration des Schalters 31 in das Gehäuse der Antriebseinrichtung 5. Die optionale Verzögerungseinrichtung kann mit in das Gehäuse 59 eingebaut oder in die Antriebseinrichtung 5 oder das Netzsteckerteil 17 integriert werden.

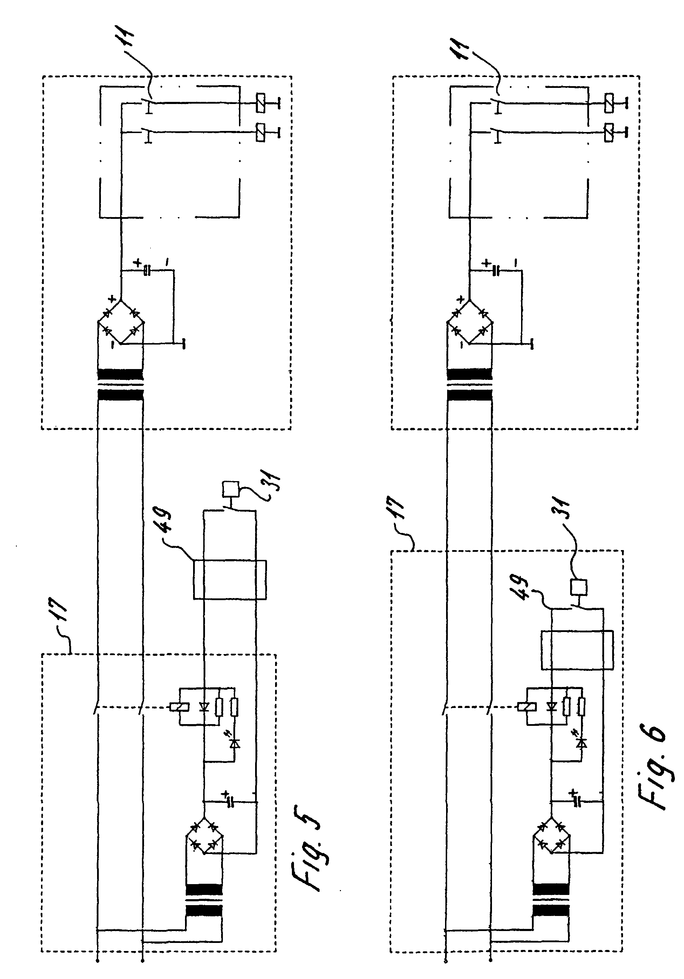

Weitere Varianten ergeben sich durch eine Integration des Gehäuses 59 in die Netzzuleitung 15 zwischen Netzsteckerteil 17 und Antriebseinrichtung 5 '(Fig. 1 d und Fig. 5) oder durch eine Integration des Schalters 31 in das Netzsteckerteil 17 (Fig. 1e und Fig. 6). Bei der Variante der Fig. 5 ist es besonders vorteilhaft, anstelle der Spannungsquelle 22 eine Batterie oder einen Dynamo zur Erzeugung der Steuergleichspannung einzusetzen (nicht dargestellt). In diesem Fall muß die Schaltung zur Netzfreischaltung überhaupt nicht mehr elektrisch mit der Schaltung zur Motoransteuerung verbunden werden. Einziger Berührungspunkt der beiden Schaltungen ist in diesem Fall das Netzfreischaltungsrelais, welches ja allerdings mechanisch arbeitet, so daß wirklich keine galvanische Zusammenführung der beiden Schaltungen mehr gegeben ist.

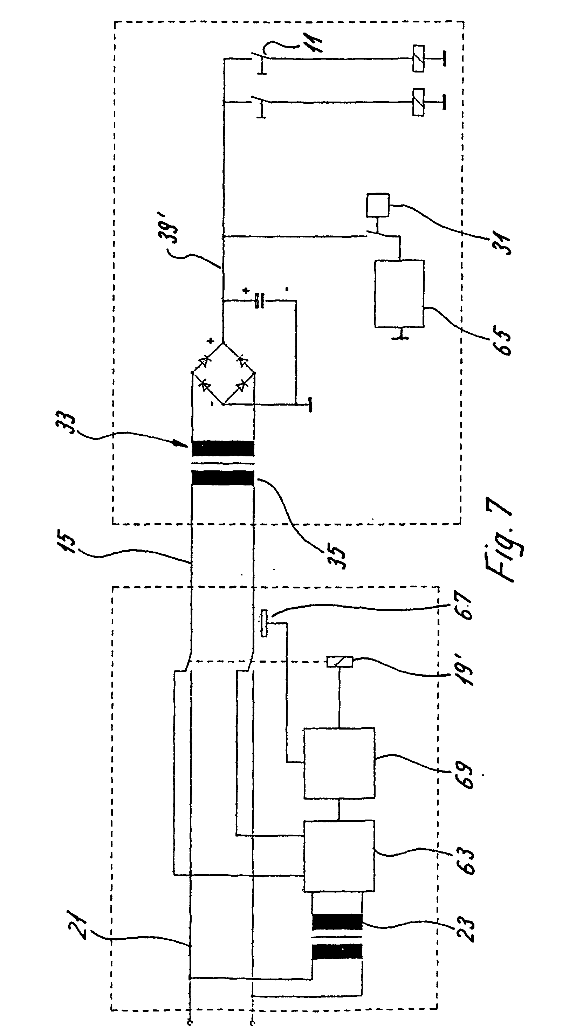

Bei dem Ausführungsbeispiel nach Fig. 7 - bei dem bzgl. der Art und bzgl. des Ortes der Anordnung der Schalteinrichtung 31 alle der bereits beschriebenen Varianten ausführbar sind - ist das Relais 19 als Wechselkontaktrelais 19' ausgelegt. Dabei verbinden die Kontakte des Wechselkontaktrelais 19' in einer der beiden Schaltstellungen die Netzspannungsquelle zur Versorgung der Stellmotoren der Antriebseinrichtung mit der Netzwechselspannung bzw. den Zuleitungen 21 und in der anderen Schaltstellung mit einer Einrichtung 63 zur Erzeugung von Impulssignalen, insbesondere HF-Signalen.

Die HF-Signale werden über die Netzzuleitung 15, die netzgebundene Spannungsquelle 33 und die Plusleitung 39' geführt, an welche die Schalteinrichtung 31 angeschlossen ist. Im geschlossenen Zustand der Schalteinrichtung 31 gelangen die HF-Signale in ein Netzwerk 65, was eine Veränderung der Signalform in der Netzzuleitung 15 bewirkt. Diese Veränderung wird mit einem Sensor - z.B. ein Stromflußsensor 67 - im Steckernetzteil an den Adern zur Netzzuleitung detektiert. Eine Verarbeitungseinheit 69 vergleicht die Ausgabe des Sensors 67 mit vorgespeicherten Grenzwerten oder - in besonderer Ausführung - vorgespeicherte Wellenformen.

Hierzu ist die Verarbeitungseinheit beispielsweise mit einem Speicher versehen und sie weist einen Prozessor auf, z.B. einen DSP-Prozessor (Digital Signal Processor), wie er z.B. von bekannten Elektronikfirmen angeboten wird. Vorzugsweise ist der Signalsensor als Stromsensor ausgebildet, wobei der DSP-Prozessor dazu ausgelegt ist, in dem Speicher abgespeicherte Wellenformmuster mit den Ausgangssignalen des Stromsensors 67 zu vergleichen. In Abhängigkeit von diesem Vergleich wird beim Schließen des Schalters 31 das Steuersignal auf den Eingang des Relais 19' geschaltet und das Netz zugeschaltet, z.B. für einen vordefinierten Zeitraum von 5 min, wonach wiederum eine automatische Netzfreischaltung erfolgen kann (hierzu kann wiederum eine Verzögerungseinrichtung genutzt werden, die bei einer Prozessorsteuerung auch per Software realisierbar ist).

Optional ist es auch denkbar, auch die Netzzu- und -abschaltung in Abhängigkeit vom Ausgangssignal des Stromsensors durchzuführen, z.B. indem nach einer Betätigung eines Stellmotors anhand der durch das Abstellen des Stellmotors veränderte Stromsignal eine Relaisbetätigung vom DSP-Prozessor ausgelöst wird.

### Bezugszeichen

- Verstellvorrichtung: 1
- Gleichspannungs-Stellmotor: 3
- Antriebseinrichtung: 5
- Bedienungseinheit: 9
- Tastschalter: 11
- Handschalterleitung: 13
- Netzzuleitung: 15
- Netzsteckerteil: 17
- Relais: 19
- Adern: 21
- Spannungsquelle: 22
- Transformator: 23
- Gleichrichter: 25
- Pluspol: 27
- Minuspol: 29
- Adern: 27', 29'
- Gleichspannungsquelle: 33
- Transformator: 35
- Gleichrichter: 37
- Pluspol: 39
- Minuspol: 41
- Glättungskondensator: 43
- Motorrelais: 47
- Verzögerungseinrichtung: 49
- Diode: 51
- Widerstand: 53
- Leuchtdiode: 55
- Widerstand: 57
- Gehäuse: 59
- Gehäusezuleitung: 61
- Impulserzeuger: 63
- Logikschaltung: 65
- Sensor: 67
- Verarbeitungseinheit: 69

## Patentansprüche

1. Verstellvorrichtung zur Verstellung eines Möbels, die folgendes aufweist:
a) eine wenigstens einen Gleichspannungs-Stellmotor (3) aufweisende Antriebseinrichtung (5), der eine netzgebundene Spannungsquelle (33) zugeordnet ist;
b) eine Bedienungseinheit (9) mit wenigstens einer Schalteinrichtung (11) zum Betätigen des wenigstens einen Stellmotors (3);
c) ein in ein Steckernetzteil (17) oder in eine Zuleitung zur netzgebundenen Spannungsquelle (33) geschaltetes Netzfreischaltungsrelais (19),
**gekennzeichnet durch**
d) ein von der wenigstens einen Schalteinrichtung (11) zum Betätigen des wenigstens einen Stellmotors der Bedienungseinheit getrenntes Schaltmittel (31) zur Betätigung des Netzfreischaltungselais (19), welches in die Bedienungseinheit (9) integriert ist oder in eine Leitung (61), die von einer Handschalterleitung (13) zur Bedienungseinheit abzweigt.

2. Verstellvorrichtung nach Anspruch 1, **dadurch gekennzeichnet, daß** die Schalteinrichtung (31) zur Betätigung des Relais (19) und die Schalteinrichtung (11) zum Betätigen des wenigstens einen Stellmotors (3) im Zustand der Netzfreischaltung galvanisch vollständig voneinander getrennt sind.

3. Verstellvorrichtung nach Anspruch 1 oder 2, **dadurch gekennzeichnet, daß** das Schaltmittel (31) zur Betätigung des Netzfreischaltungsrelais (19) dessen Steuereingang vorgeschaltet ist.

4. Verstellvorrichtung nach Anspruch 1, 2 oder 3, **dadurch gekennzeichnet, daß** zur Erzeugung einer Steuerspannung zur Betätigung des Netzfreischaltungsrelais (19) eine Spannungsquelle (22) vorgesehen ist, welche die vor den beiden Relaiskontakten abgegriffene Netz-Wechselspannung in eine Steuergleichspannung umsetzt.

5. Verstellvorrichtung nach einem der Ansprüche 1 bis 4, **dadurch gekennzeichnet, daß** das Schaltmittel (31) zur Betätigung des Netzfreischaltungsrelais (19) einen Neigungssensor umfaßt.

6. Verstellvorrichtung nach einem der Ansprüche 1 bis 4, **dadurch gekennzeichnet, daß** die Schaltmittel (31) zur Betätigung des Netzfreischaltungsrelais (19) einen akustischen Sensor umfaßt.

7. Verstellvorrichtung nach einem der Ansprüche 1 bis 4, **dadurch gekennzeichnet, daß** die Schaltmittel (31) zur Betätigung des Netzfreischaltungsrelais (19) einen Bewegungssensor umfaßt.

8. Verstellvorrichtung nach einem der Ansprüche 1 bis 4, **dadurch gekennzeichnet, daß** die Schalteinrichtung (31) zur Betätigung des Netzfreischaltungsrelais (19) einen lichtempfindlichen Sensor umfaßt.

9. Verstellvorrichtung nach einem der Ansprüche 1 bis 4, **dadurch gekennzeichnet, daß** das Schaltmittel (31) zur Betätigung des Netzfreischaltungsrelais (19) einen Berührungsensor umfaßt.

10. Verstellvorrichtung nach einem der vorstehenden Ansprüche, **dadurch gekennzeichnet, daß** das Schaltmittel zur Betätigung des Netzfreischaltungsrelais (19) ein Zeitglied (49) zur Schaltverzögerung nach einer Betätigung des Schaltmittels (31) umfaßt.

11. Verstellvorrichtung nach einem der vorstehenden Ansprüche, **dadurch gekennzeichnet, daß**
- das Relais als Wechselkontaktrelais (19') ausgelegt ist,
- wobei die Kontakte des Wechselkontaktrelais (19') in einer der beiden Schaltstellungen eine Spannungsquelle zur Versorgung der Stellmotoren der Antriebseinrichtung mit der Netzwechselspannung and in der anderen Schaltstellung mit einer Einrichtung (63) zur Erzeugung vom Impulssignale verbinden,
- den Schaltmitteln (31) zur Betätigung des Wechselkontaktrelais (19') ein Netzwerk (65) zur Verarbeitung der Impulssignale bei einer Betätigung des Schaltmittels nachgeschaltet ist, wobei
- ein Signalsensor (67) an der Netzleitung vom Wechselkontaktrelais (19') zum Schaltmittel (31) angeordnet ist, dessen Ausgang an einer Verarbeitungseinrichtung (69) zur Betätigung des Wechselkontaktrelais (19') in Abhängigkeit vom Ausgangssignal des Signalsensors (67) angeschlossen ist.

12. Verstellvorrichtung nach einem der vorstehenden Ansprüche, **dadurch gekennzeichnet, daß** die Einrichtung (69) zur Betätigung des Wechselkontaktrelais (19') einen Speicher sowie einen Prozessor umfaßt.

13. Verstellvorrichtung nach Anspruch 12, **dadurch gekennzeichnet, daß** der Prozessor ein DSP-Prozessor ist.

14. Verstellvorrichtung nach einem der vorstehenden Ansprüche, **dadurch gekennzeichnet, daß** der Signalsensor (67) als Stromsensor ausgelegt ist und in dem Speicher vorgespeicherte Wellenformmuster abgespeichert sind, wobei der DSP-Prozessor zu einem Vergleich der Wellenformmuster mit den Ausgangssignalen des Stromsensors (67) und zu einer Ausgabe eines Steuersignales in Abhängigkeit von diesem Vergleich ausgelegt ist.

15. Verstellvorrichtung nach einem der vorstehenden Ansprüche, **dadurch gekennzeichnet, daß** die Spannungsquelle (22) als Batterie oder Dynamo ausgelegt ist.

16. Verstelleinrichtung nach einem der vorstehenden Ansprüche, **dadurch gekennzeichnet, daß** der Dynamo als handbetätigter Dynamo ausgelegt ist.

## Claims

1. Adjusting device for adjusting an item of furniture, which device has the following:
a) a drive device (5), which has at least one DC servo motor (3) and is assigned a mains-dependent voltage source (33);
b) an operator unit (9) with at least one switching device (11) for actuating the at least one servo motor (3);
c) a mains-disconnecting relay (19), connected into a plug-in power supply unit (17) or into a lead to the mains-dependent voltage source (33),
**characterized by**
d) a switching means (31) for actuating the mains-disconnecting relay (19), which means is separate from the at least one switching device (11) for actuating the at least one servo motor of the operator unit and is integrated into the operator unit (9) or into a line (61) which branches off from a manual-switch line (13) to the operator unit.

2. Adjusting device according to Claim 1, **characterized in that**, in the state of disconnection from the mains, the switching device (31) for actuating the relay (19) and the switching device (11) for actuating the at least one servo motor (3) are electrically isolated completely from each other.

3. Adjusting device according to Claim 1 or 2, **characterized in that** the switching means (31) for actuating the mains-disconnecting relay (19) is connected upstream of the control input of the latter.

4. Adjusting device according to Claim 1, 2 or 3, **characterized in that**, for generating a control voltage for actuating the mains-disconnecting relay (19), a voltage source (22) which converts the AC mains voltage tapped upstream of the two relay contacts into a DC control voltage is provided.

5. Adjusting device according to one of Claims 1 to 4, **characterized in that** the switching means (31) for actuating the mains-disconnecting relay (19) comprises an inclination sensor.

6. Adjusting device according to one of Claims 1 to 4, **characterized in that** the switching means (31) for actuating the mains-disconnecting relay (19) comprises an acoustic sensor.

7. Adjusting device according to one of Claims 1 to 4, **characterized in that** the switching means (31) for actuating the mains-disconnecting relay (19) comprises a movement sensor.

8. Adjusting device according to one of Claims 1 to 4, **characterized in that** the switching device (31) for actuating the mains-disconnecting relay (19) comprises a light-sensitive sensor.

9. Adjusting device according to one of Claims 1 to 4, **characterized in that** the switching means (31) for actuating the mains-disconnecting relay (19) comprises a contact sensor.

10. Adjusting device according to one of the preceding claims, **characterized in that** the switching means for actuating the mains-disconnecting relay (19) comprises a timing element (49) for delaying switching after an actuation of the switching means (31).

11. Adjusting device according to one of the preceding claims, **characterized in that**
- the relay is designed as a changeover-contact relay (19'),
- the contacts of the changeover-contact relay (19') in one of the two switching positions connecting a voltage source for supplying the servo motors of the drive device to the AC mains voltage and in the other switching position connecting it to a device (63) for generating pulse signals,
- connected downstream of the switching means (31) for actuating the changeover-contact relay (19') is a network (65) for processing the pulse signals when there is an actuation of the switching means, in which arrangement
- a signal sensor (67) is arranged on the mains line from the changeover-contact relay (19') to the switching means (31), the output of which is connected to a processing device (69) for actuating the changeover-contact relay (19') in dependence on the output signal of the signal sensor (67).

12. Adjusting device according to one of the preceding claims, **characterized in that** the device (69) for actuating the changeover-contact relay (19') comprises a memory and a processor.

13. Adjusting device according to Claim 12, **characterized in that** the processor is a DSP processor.

14. Adjusting device according to one of the preceding claims, **characterized in that** the signal sensor (67) is designed as a current sensor and pre-stored waveform patterns are stored in the memory, the DSP processor being designed for a comparison of the waveform patterns with the output signals of the current sensor (67) and for an output of a control signal in dependence on this comparison.

15. Adjusting device according to one of the preceding claims, **characterized in that** the voltage source (22) is designed as a battery or dynamo.

16. Adjusting device according to one of the preceding claims, **characterized in that** the dynamo is designed as a manually actuated dynamo.

## Revendications

1. Dispositif de déplacement pour déplacer un meuble, comprenant :
a) un dispositif d'entraînement (5) avec au moins un moteur de commande à tension continue (3), auquel est associée une source de tension liée au secteur (33) ;
b) une unité de commande (9) avec au moins un élément de commutation (11) pour l'actionnement de l'au moins un moteur de commande (3) ;
c) un relais de déconnexion du secteur (19) placé dans un bloc secteur (17) ou dans une ligne d'alimentation de la source de tension liée au secteur (33),
**caractérisé par**
d) un moyen de commutation (31) pour l'actionnement du relais de déconnexion du secteur (19), qui est séparé de l'au moins un élément de commutation (11) pour l'actionnement de l'au moins un moteur de commande de l'unité de commande, lequel moyen de commutation est intégré dans l'unité de commande (9) ou dans une ligne (61), qui est déviée d'une ligne de commutateur manuel (13) vers l'unité de commande.

2. Dispositif de déplacement selon la revendication 1, **caractérisé en ce que** le dispositif de commutation (31) pour l'actionnement du relais (19) et l'élément de commutation (11) pour l'actionnement de l'au moins un moteur de commande (3) font l'objet d'une séparation galvanique complète entre eux dans l'état de déconnexion du secteur.

3. Dispositif de déplacement selon la revendication 1 ou 2, **caractérisé en ce que** le moyen de commutation (31) pour l'actionnement du relais de déconnexion du secteur (19) est placé en amont de l'entrée de commande de celui-ci.

4. Dispositif de déplacement selon la revendication 1, 2 ou 3, **caractérisé en ce que** pour la génération d'une tension de commande pour l'actionnement du relais de déconnexion du réseau (19) il est prévu une source de tension (22), qui convertit la tension alternative du secteur collectée sur les deux contacts du relais en une tension continue de commande.

5. Dispositif de déplacement selon l'une des revendications 1 à 4, **caractérisé en ce que** le moyen de commutation (31) pour l'actionnement du relais de déconnexion du secteur (19) comprend un capteur d'inclinaison.

6. Dispositif de déplacement selon l'une des revendications 1 à 4, **caractérisé en ce que** le moyen de commutation (31) pour l'actionnement du relais de déconnexion du secteur (19) comprend un capteur acoustique.

7. Dispositif de déplacement selon l'une des revendications 1 à 4, **caractérisé en ce que** le moyen de commutation (31) pour l'actionnement du relais de déconnexion du secteur (19) comprend un capteur de mouvement.

8. Dispositif de déplacement selon l'une des revendications 1 à 4, **caractérisé en ce que** le dispositif de commutation (31) pour l'actionnement du relais de déconnexion du secteur (19) comprend un capteur photosensible.

9. Dispositif de déplacement selon l'une des revendications 1 à 4, **caractérisé en ce que** le moyen de commutation (31) pour l'actionnement du relais de déconnexion du secteur (19) comprend un capteur de contact.

10. Dispositif de déplacement selon l'une des revendications précédentes, **caractérisé en ce que** le moyen de commutation pour l'actionnement du relais de déconnexion du secteur (19) comprend un élément de temporisation (49) pour la temporisation de la commutation après un actionnement du dispositif de commutation (31).

11. Dispositif de déplacement selon l'une des revendications précédentes, **caractérisé en ce que**
- le relais est conçu comme relais à contacts inverseurs (19'),
- les contacts du relais à contacts inverseurs (19') reliant dans l'une des deux positions de commutation une source de tension pour l'alimentation des moteurs de commande du dispositif d'entraînement avec la tension alternative du secteur et dans l'autre position de commutation avec un dispositif (63) pour la génération de signaux d'impulsions,
- les moyens de commutation (31) pour l'actionnement du relais à contacts inverseurs (19') étant suivis d'un réseau (65) pour le traitement des signaux d'impulsions lors d'un actionnement du moyen de commutation, et
- un capteur de signaux (67) étant disposé dans la ligne du secteur depuis le relais à contacts inverseurs (19') jusqu'au moyen de commutation (31), dont la sortie est branchée sur un dispositif de traitement (69) pour l'actionnement du relais à contacts inverseurs (19') en fonction du signal de sortie du capteur de signaux (67).

12. Dispositif de déplacement selon l'une des revendications précédentes, **caractérisé en ce que** le dispositif (69) pour l'actionnement du relais à contacts inverseurs (19') comprend une mémoire ainsi qu'un processeur.

13. Dispositif de déplacement selon la revendication 12, **caractérisé en ce que** le processeur est un processeur DSP.

14. Dispositif de déplacement selon l'une des revendications précédentes, **caractérisé en ce que** le capteur de signaux (67) est conçu comme capteur de courant et **en ce que** des modèles de formes d'ondes préenregistrés sont stockés dans la mémoire, le processeur DSP étant conçu pour une comparaison des modèles de forme d'ondes avec les signaux de sortie du capteur de tension (67) et pour fournir un signal de commande en fonction de cette comparaison.

15. Dispositif de déplacement selon l'une des revendications précédentes, **caractérisé en ce que** la source de tension (22) est réalisée sous forme de batterie ou de dynamo.

16. Dispositif de déplacement selon l'une des revendications précédentes, **caractérisé en ce que** la dynamo est réalisée en tant que dynamo actionnée à la main.
